# EUROPEAN PATENT APPLICATION

(11) **EP 0 747 688 A1**
(43) Date of publication of application: **11.12.1996**
(21) Application number: 96201531.9
(22) Date of filing: 03.06.1996
(51) Int. Cl.: G01M 17/04, G01M 17/007, G01L 5/28

(54) **Roller dynamometer having supporting rollers and a supporting element which is arranged between them and can be moved in the vertical direction**

(30) Priority: 07.06.1995 NL 1000509
(71) Applicant: Sun Electric Systems B.V., NL-1382 LG Weesp (NL)
(72) Inventor: Van Alfen, Maarten Rudolfus Henricus, 3818 LM Amersfoort (NL); Lammers, Jan Willem, 1383 DX Weesp (NL); Hettema, Robert Raymond, 3816 MA Amersfoort (NL)
(74) Representative: Timmers, Cornelis Herman Johannes

(57) **Abstract**

For the purpose of extending the user possibilities of a roller dynamometer known per se with at least two pairs of supporting rollers for supporting the wheels of a (motor) vehicle which is to be tested, between which supporting rollers is arranged a supporting element which can be moved in the vertical direction by means of an actuator, the invention proposes designing this actuator to exert a variable supporting force on the vehicle wheel cooperating with the pair of rollers in question. In this way, it is very simple to simulate driving over a poor road surface, and any bodywork irregularities or rattling can be detected. Moreover, if the actuator is connected to the supporting element by means of a force transducer for determining the force exerted on the supporting element, it is possible to gain an insight into the suspension-damping characteristic of the vehicle in question.

## Description

The invention relates to a roller dynamometer having at least two pairs of supporting rollers to support the wheels of a vehicle axle, and having a supporting element between the rollers of each pair, which supporting element can be moved in the vertical direction by means of an actuator and can come to bear against that part of the wheel which is free of the rollers and is situated between the rollers.

A roller dynamometer of this kind is known in numerous variants, marketed by the applicant as the "roller tester LCA 30" and is described in US-A-2 709 362.

In a roller tester of this kind the supporting element can be raised in order to facilitate driving the vehicle which is to be tested onto and off the test bed; this is necessary, in particular, for a motor vehicle with small wheels. The supporting element is then moved downwards and the wheels rest solely on the rollers.

US-A-2 709 362 describes two embodiments of such an supporting element. In the first embodiment the supporting element is U-shaped and can tilt around a horizontal axis to be placed in the operative - and non-operative position respectively. In the second embodiment the supporting element is a flat plate supported by an actuating cylinder by means of which the plate can be raised and lowered respectively. In the non-operative state of the supporting element the wheels rest exclusively on the rollers.

Furthermore, US-A-2 709 362 describes the possibility to set-up vibrations in the wheel, and thereby the whole body by means of excentrical rollers which are brought into contact with the wheel to test the vehicle with regard to irregularities of the body and the chassis, such as rattles, and to test the dampers.

The invention is based on the insight that the function of the distinct elements used for setting-up vibrations in the bodywork can advantageously be effected by the supporting elements when the actuator of at least one of the pairs thereof is designed for exerting, by means of the supporting element, a variable force on the vehicle wheel supported thereby.

This measure has the advantage that a separate to be driven vibrating element can be omitted and that in each roller dynamometer, which is only provided with a vertically movable supporting element such as the roller tester LCA 30, a simple modification makes it suitable for detecting bodywork and chassis irregularities, as well as for testing the suspension and shock absorbers.

Preferably, all the actuators are designed to exert a variable force on the vehicle wheel which they support.

In a simple embodiment, the actuators are operated by fluid pressure which can be varied intermittently.

Important possibilities of use arise if the supporting element is coupled to a force transducer for supplying a signal representing the reaction force exerted on the element when a wheel is raised. As a result, an insight can be obtained into the operation of the suspension and damping members interacting with the wheel in question.

If, at the same time, a displacement transducer is used for determining the distance covered by a wheel when it is raised, the complete force/displacement curve can be recorded, on the basis of which the suspension-damping characteristic can be assessed.

In a known manner, the element can consist of a supporting plate, but it can also comprise at least two auxiliary rollers situated at a distance from one another and having axes of rotation which are parallel to the rollers of the test bed, one of the rollers optionally being coupled to a transmitter which supplies a signal representing the rotational speed. By means of this measure, which in itself is extremely simple, an ABS braking system can be tested for correct operation.

In order to facilitate driving the vehicle onto and off the test bed, it is advantageous for the auxiliary rollers to be able to be locked in the stationary position.

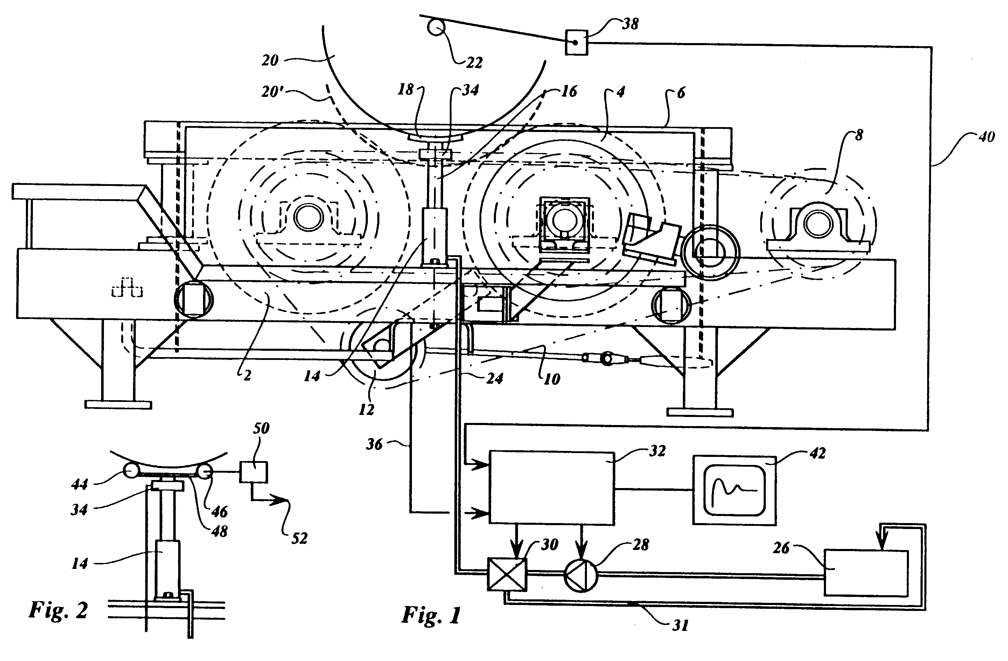

The invention is explained with reference to the drawing, in which Fig. 1 shows, diagrammatically, half in elevation and half in cross-section, a pair of rollers of a roller dynamometer, which is known per se and in which the measures according to the invention are used.

Although Figure 2 shows only one pair of rollers and a modified design of the support used therein, it is known that a roller dynamometer has at least two, and usually four, pairs of rollers of this kind. The pair of rollers drawn are those used in the "Rollertester LCA 30" which is marketed by the applicant and is known per se.

The two rollers, designated by 2 and 4, respectively, are incorporated in a framework 6. This framework 6 also comprises a drive roll 8, which forms part of a drive system for the rollers 2 and 4, which are driven by means of, inter alia, the drive belt 10 interacting with the tensioning wheel 12. No further details of this drive, which is given by way of example, are described, since all this belongs to the prior art.

An actuator 14, which in this exemplary embodiment is a hydraulic actuator and whose piston 16 bears a supporting plate 18, is situated between the rollers. This supporting plate 18 can adopt two positions: the raised position shown, in which the supporting plate has raised the wheel 20 having axle 22 to the extent that this wheel is free of the rollers 2 and 4, and a lowered position, not shown, in which the wheel 20 assumes the position 20' shown by dashed lines, and the wheel thus rests on the rollers 2 and 4.

According to the prior art, the sole function of the plate 18 is to facilitate driving the vehicle wheels onto and off the rollers. It will be recognized that this driving on and off is facilitated by the supporting plate 18 in the raised position.

The invention is based on the insight that the tests which can be carried out with a roller dynamometer of this type can be extended, without major investment and in a simple manner, by designing the actuator to exert a variable supporting force on the vehicle wheel interacting therewith so that, as a result, it is possible to simulate driving on a poor road surface and the reaction of the vehicle thereto can be tested. In particular, if a roller dynamometer, which is almost always present, at the end of a production line, is extended in the manner proposed by the invention, the bodywork can be checked completely for rattling directly, for example by powering the actuators in a programmed manner and observing the reaction of the bodywork to this influence with the aid of a microphone arranged in the vehicle interior. It is possible to digitize, analyse and record the output signal from the microphone.

This exertion of a variable supporting force is possible in a simple manner in particular if the actuators, as is generally the case, are operated by fluid pressure, for example a hydraulic medium. To this end a control and reversing valve 30 is incorporated in the medium supply line 24, which leads to the actuator 14 and to which medium is supplied under pressure from a reservoir 26 and a booster pump 28. When the valve 30 is closed the medium which is pumped up by the pump 28 is returned to the reservoir 26 via the return line 31.

It will be clear to the person skilled in the art that both the amplitude and the frequency of the discontinuous movement which is to be carried out by the supporting plate 18 can be adjusted as desired.

To this end a central control device 32 is present, which controls both the pump 28 and the reversing valve 30 in the desired manner.

Furthermore, advantageous possibilities arise if a force transducer 34 is incorporated between the operating rod of the actuator 14 and the supporting plate 18, which force transducer supplies an electrical output signal via the output line 36, the amplitude of which signal is representative of the force exerted by the supporting plate 18 on the wheel 20. If, in addition, the displacement of the wheel axle 22 or of the actuator 14 is then detected, for example by means of a displacement transducer 38, drawn diagrammatically, an insight of the operation of the suspension and damping of the wheel in question is obtained directly. The figure shows how the output signals from the force transducer 34 and displacement transducer 38, respectively, are fed via the lines 36 and 40, respectively, to the central processing unit 32 which, after processing the signals, displays the suspension and damping characteristic of the wheel in question on a display 42.

It lies within the scope of the invention to replace the supporting plate 18 with two freely rotatable auxiliary rollers 44 and 46, respectively, which are situated at a distance from one another and the axes of which are parallel to those of the rollers 2 and 4 and which are borne by a frame 48 which is supported by the actuator 14, via the force transducer 34. One of the rollers, in this case the roller 46, is connected to a transducer 50, which at the output 52 supplies an output signal which is proportional to the rotational speed of the roller. This can be used, for example, to check the operation of the ABS system of the axle in question.

Clearly, the rollers 44 and 46 can preferably be locked against rotation, in order to enable a vehicle wheel to be driven on and off easily.

## Claims

1. Roller dynamometer having at least two pairs of supporting rollers to support the wheels of a vehicle axle, and having a supporting element between the rollers of each pair, which supporting element can be moved In the vertical direction by means of an actuator and can come to bear against that part of the wheel which is free of the rollers and is situated between the rollers, characterized in that the actuator of at least one of the pairs is designed to exert a variable force, by means of the supporting element, on the vehicle wheel which they support.

2. Roller dynamometer according to claim 1, characterized in that all the actuators are designed to exert a variable force on the vehicle wheel which they support.

3. Roller dynamometer according to claims 1 - 2, characterized in that the actuator(s) is (are) operated by fluid pressure, which can be varied intermittently.

4. Roller dynamometer according to claims 1 - 3, characterized in that the supporting element is coupled to a force transducer for supplying a signal representing the reaction force exerted on the element when a wheel is raised.

5. Roller dynamometer according to claim 4, characterized by a displacement transducer for determining the distance covered by a wheel during the raising thereof.

6. Roller dynamometer according to claims 1 - 5, characterized in that the element consists of a supporting plate.

7. Roller dynamometer according to claims 1 - 5, characterized in that the element comprises at least two auxiliary rollers situated at a distance from one another and having axes of rotation which are parallel to the rollers of the dynamometer, one of the rollers optionally being coupled to a transmitter which supplies a signal representing the rotational speed.

8. Roller dynamometer according to claim 7, characterized in that the auxiliary rollers can be locked in the stationary position.
